# FASCICULE DE BREVET EUROPEEN

(11) **EP 0 443 396 B1**
(45) Date de publication et mention de la délivrance du brevet: **09.11.1994**
(21) Numéro de dépôt: 91101855.4
(22) Date de dépôt: 11.02.1991
(51) Int. Cl.: B26D 1/14, B26D 1/22, B26D 7/08, B26D 7/10

(54) **Machine à fendre en long une bande de matière qui défile**
Vorrichtung zum Schneiden eines laufenden Bandes von Material in Längsrichtung
Apparatus to cut longitudinally a moving strip of material

(30) Priorité: 21.02.1990 CH 566/90
(43) Date de publication de la demande: 28.08.1991
(73) Titulaire: PETERS MASCHINENFABRIK GmbH, 22525 Hamburg (DE)
(72) Inventeur: Schroeder, Lothar, W-2200 Altenmoor (DE)
(74) Mandataire: Colomb, Claude

(56) Documents cités:
- CH-A- 600 026
- DE-A- 2 839 098
- FR-A- 2 495 989
- GB-A- 1 447 620
- GB-A- 2 072 563
- US-A- 2 796 933

## Description

La présente invention concerne une machine pour fendre en long une bande de matière qui défile, telle que définie dans le préambule de la revendication 1.

Jusqu'à ce jour, les machines utilisées pour fendre en long une bande de carton ondulé ou similaire qui défile comprennent un outil et un contre-outil qui ont chacun la forme d'un disque.

L'outil est monté sur un premier arbre rotatif, le contre-outil sur un second arbre rotatif parallèle au premier, les deux arbres étant orientés perpendiculairement au sens de défilement de la bande et distants entre eux de façon que l'outil et le contre-outil aient une petite portion du pourtour de leur disque pressée en contact l'une contre l'autre de façon à couper de manière analogue à l'action d'un ciseau, la bande de matière. Généralement, la vitesse périphérique des deux disques est identique et en principe supérieure à la vitesse de défilement de la bande. Il est à remarquer que plusieurs outils et contre-outils peuvent être transversalement répartis sur la bande à fendre. De même, leur position doit pouvoir varier en fonction des besoins.

On connaît un autre dispositif pour fendre en long des plaques de matériau composite se présentant sous la forme d'un sandwich, à base de fibre de verre, constitué de deux feuilles de matière plastique entre lesquelles est placée une couche de fibres de verre imprégnée de résine polyester, cette couche pouvant aussi être chargée de particules minérales.

Lors de l'opération de coupe de ces plaques, les fibres de verre, localisées dans le sens perpendiculaire à la coupe, occasionnent par intermittence un blocage des plaques au niveau des couteaux et de ce fait il se produit un encrassement important de ces derniers.

Pour éviter ou du moins diminuer cet encrassement, il convient d'entraîner le matériau composite lors de l'opération de coupe.

Pour ce faire, on utilise un outil circulaire supérieur monté entre deux flasques et entraîné par des poulies latérales sur lesquelles passent des courroies qui transitent aussi sur d'autres poulies, elles aussi disposées sur les flasques, de façon à ce que les brins inférieurs des courroies viennent prendre appui sur le matériau, cela de part et d'autre de la ligne de coupe.

Un dispositif de ce genre est décrit dans la demande de brevet FR-A-2 495 989.

Ces dispositifs connus de fendage en long, avec outil et contre-outil, qui découpent une bande ou des plaques d'une manière en quelque sorte identique à celle d'une paire de ciseaux, ont le grave inconvénient de ne pas réaliser une coupe lisse et sans bavure de la bande qui défile ou des plaques, et de provoquer à l'endroit de refendage un phénomène de formation de poils ou de fines peluches en relativement grande quantité qui vont ensuite se propager sur la surface plane de la bande pour y former une sorte de couche de poussière très néfaste à certaines opérations suivantes de traitement de surface, surtout à celle d'impression par flexographie.

La présente invention a donc pour but de réaliser une machine pour fendre en long d'une bande de matière qui défile qui élimine les inconvénients décrits ci-dessus. Ce but est atteint grâce à une machine selon la revendication 1.

Il sera maintenant décrit un mode de réalisation de l'invention en référence au dessin annexé dans lequel :
- la figure 1 représente une vue en coupe d'une machine destinée à fendre en long une bande qui défile selon la présente invention,
- la figure 2 représente une coupe selon A - A de la figure 1, et
- la figure 3 représente une vue en coupe plus détaillée d'une partie de la figure 2.

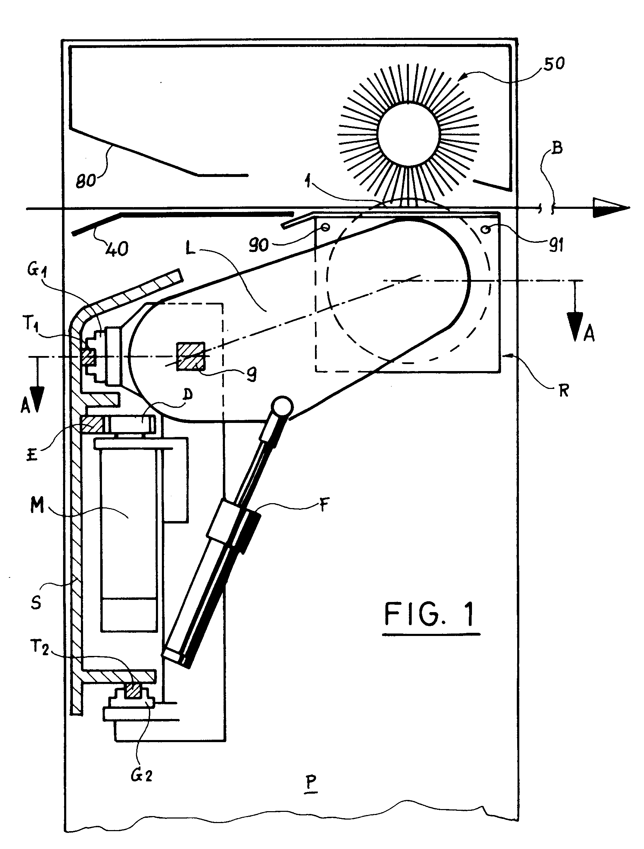

La figure 1 est une coupe d'une machine de refendage en long d'une bande B qui défile. La coupe est réalisée longitudinalement, c'est-à-dire parallèlement au sens de défilement de la bande B. Un outil de refendage 1 est monté sur un des dispositifs de refendage R transversalement répartis au long de la largeur de la bande B. La machine comprend un support principal S s'étendant sur toute la largeur et au-dessous de la bande B et muni de deux rails transversaux T₁, T₂ et d'une barre à crémaillère E. Le support principal S est monté sur deux parois latérales P (dont une seule est visible sur la figure 1) entre lesquelles défile la bande B. Chaque dispositif de refendage R est fixé sur la première extrémité d'un levier basculant L dont l'autre extrémité est montée en pivotement libre sur un chariot C transversalement déplaçable grâce à des glissières G₁, G₂ en prise avec les rails T₁, T₂ du support principal S. Un moteur M fixé sur chaque chariot C est prévu pour déplacer, par l'intermédiaire d'une roue dentée D en prise avec la crémaillère E, le chariot C en vue de positionner le dispositif de refendage R correspondant. Le basculement du levier L est obtenu par un vérin pneumatique F interposé entre le chariot C et le levier L. L'ensemble levier L - chariot C - vérin pneumatique F est arrangé de façon à pouvoir basculer le dispositif de refendage R entre une première position de travail où son outil 1 peut fendre la bande B et une seconde position dite de repos où l'outil est totalement hors du passage parcouru par la bande B.

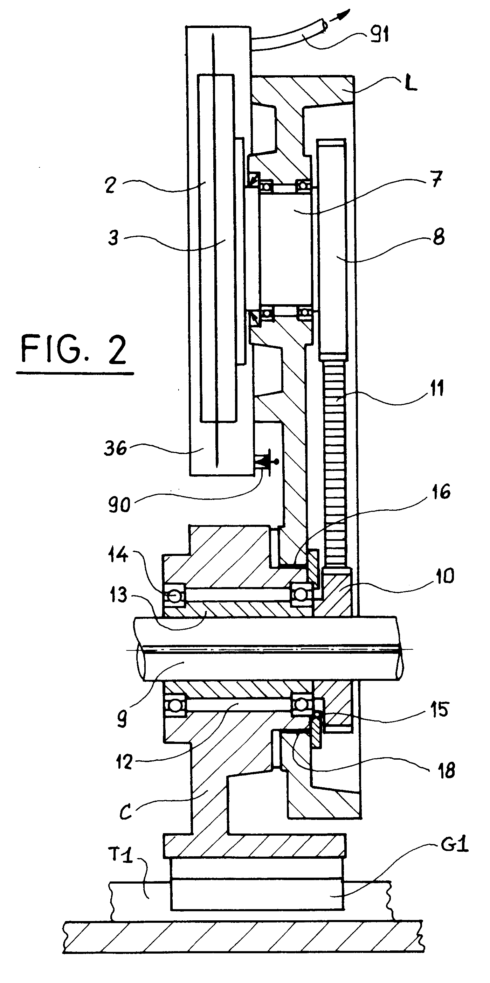

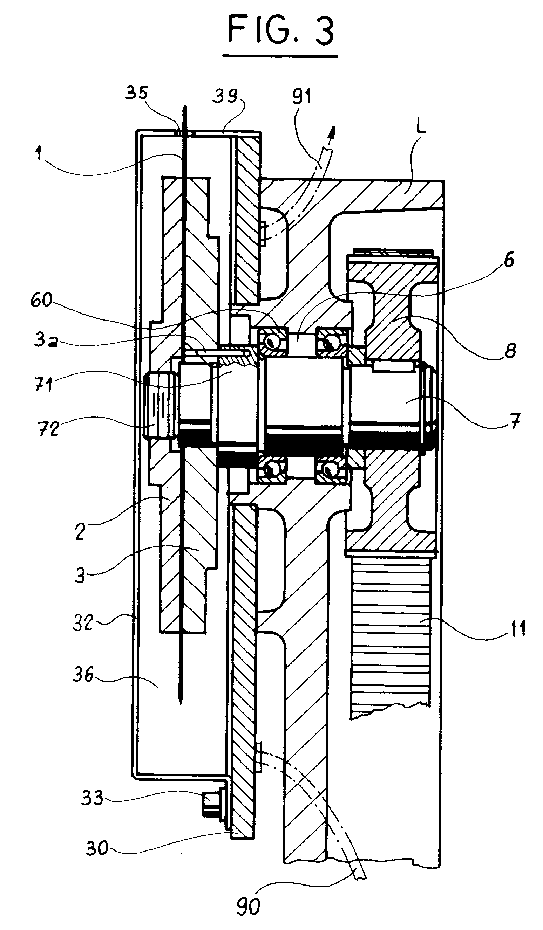

L'outil proprement dit 1 est constitué d'une fine lame circulaire en acier ayant jusqu'à 0,8 mm d'épaisseur et dont la périphérie radiale, après aiguisage ou non, est en biseau pour former une arête tranchante ou coupante. La lame circulaire peut être en acier, en céramique ou en acier traité, par exemple au plasma, etc.) La lame circulaire 1 est prise en sandwich par deux mâchoires 2, 3 sous forme de disque dont l'axe est confondu avec celui de la lame circulaire 1 mais dont le diamètre est inférieur à celui de cette dernière (voir figure 2 et 3). Un arbre 7 est monté en rotation libre, à l'aide de paliers à roulements 60, à l'intérieur d'un alésage 6 prévu à l'extrémité libre du levier basculant L. La longueur de l'arbre 7 est telle que ses deux extrémités émergent hors du levier basculant L. Sur une première extrémité de l'arbre 7 sont montées les deux mâchoires 2, 3 de la lame circulaire 1 munies chacune d'une ouverture adéquate pour l'arbre 7. Une première mâchoire 3 vient buter contre une couronne circulaire 71 de l'arbre 7. Trois goujons 3a angulairement répartis en prise avec cette couronne 71 et un orifice correspondant de la première mâchoire 3 bloquent en rotation cette mâchoire 3 sur l'arbre 7. La première extrémité de l'arbre 7 est munie d'une partie filetée 72 en prise avec un filetage correspondant de la seconde mâchoire 2 de manière à pouvoir, par vissage, presser les deux mâchoires 2, 3 l'une contre l'autre pour réaliser le blocage définitif en rotation de la lame circulaire 1 par rapport à l'arbre 7. Une première poulie dentée 8 est montée clavetée sur la second extrémité de l'arbre 7.

L'axe de pivotement du levier L est confondu avec celui d'un arbre transversal (c'est-à-dire perpendiculaire au sens de défilement de la bande) de transmission 9 de section carrée et dont chaque extrémité est montée en rotation sur des paliers (non représentés) prévus sur les deux parois latérales P. L'arbre de transmission 9 est entraîné en rotation au moins à une extrémité (par des moyens non représentés). Sur cet arbre de transmission 9 est montée bloquée en rotation une seconde roue dentée 10 reliée par une courroie dentée 11 à la première roue dentée 8. Le chariot C est muni d'un alésage 12 dont l'axe est confondu avec celui de l'arbre de transmission 9 et dans lequel une douille 13 peut librement tourner en rotation grâce à des paliers à roulements 14 interposés entre le chariot C et la douille 13. La douille 13 est munie d'un alésage de forme carrée de manière à pouvoir librement coulisser le long de l'arbre de transmission 9. Le chariot C est aussi muni d'un moyeu cylindrique 15 dont l'axe est confondu avec celui de l'arbre de transmission 9. Ce moyeu 15 pénètre à l'intérieur d'une ouverture correspondante du levier basculant L. Un palier lisse 16 est interposé entre le moyeu 15 et le levier L de manière que ce dernier puisse librement pivoter par rapport au chariot C. Une rondelle 18 empêche que le levier L puisse s'échapper du moyeu 15.

Une plaque 30 de forme carrée et centrée sur l'arbre de transmission 9 est fixée sur le levier basculant L dans l'espace compris entre ce dernier et la première mâchoire 3. Pour cela, une partie cylindrique 31 du levier basculant L est en prise avec une ouverture correspondante prévue sur la plaque 30. Un couvercle 32 de forme carrée et de section rectangulaire est fixé à l'aide de vis 33 sur la plaque 30. La forme et la disposition de la plaque 30 et du couvercle 32 sont telles que les deux éléments forment une enceinte 36 entourant totalement la lame rotative 1 à l'exception de l'extrémité supérieure de cette dernière qui peut passer au travers d'une fine fente 35 de la paroi supérieure du couvercle 32. La lame rotative 1 émerge hors de l'enceinte d'une hauteur égale, par exemple, à 1,5 à 3 fois l'épaisseur de la bande de matière B à fendre.

Comme cela est visible sur les figures 1 et 3, à l'endroit du refendage, la bande est uniquement supportée par la paroi supérieure 39 du couvercle 32. Par contre, une plaque de guidage 40 peut être prévue à l'amont des dispositifs de refendage R. Exactement au-dessus de la lame rotative 1 peut être prévue une brosse rotative 50 s'étendant sur toute la largeur de la bande B et destinée à presser légèrement la bande B en direction de la paroi supérieure 39 de l'enceinte 36.

L'enceinte 36 est remplie d'un fluide de refroidissement tel que de l'eau ou similaire, destiné à refroidir la lame 1 qui a tendance à très fortement s'échauffer par frottement pendant l'opération de refendage de la bande B, par exemple du carton ondulé. Le fluide de refroidissement exerce aussi une fonction de lubrification entre la lame l et la bande de matière B.

Des essais ont montré que dans le cas où la lame rotative 1 tourne dans le sens contraire au défilement de la bande B, sa vitesse périphérique peut être maintenue constante même dans le cas d'une augmentation de la vitesse de défilement de la bande B. Par contre, dans le cas où la lame coupante 1 tourne dans le sens du défilement de la bande B, sa vitesse périphérique, qui est supérieure à celle de défilement, doit être augmentée lorsque cette dernière augmente. Dans les deux cas, toutefois, la vitesse périphérique de la lame rotative 1 est plus élevée que celle généralement utilisée jusqu'ici pour les outils et contre-outils de refendage selon l'art antérieur et peut aller jusqu'à trois fois la vitesse de défilement de la bande B lorsque la lame rotative 1 tourne dans le sens de défilement et jusqu'à cinq fois lorsqu'elle tourne dans le sens opposé au défilement.

Sur l'enceinte 36 sont aussi prévus des moyens d'amener 90 et de retour 91 du fluide de refroidissement. De même, à l'intérieur de l'endroit où la lame coupante 1 émerge hors de l'enceinte 36, il est possible de prévoir une sorte de râcle (non représentée) destinée à ôter des résidus de colle présents sur la lame et qui résultent, par exemple, du refendage d'une bande de carton ondulé dont les différentes couches ont été réunies par collage. De même, au-dessus de la bande B peut être prévue une enceinte 80 englobant la brosse rotative 50 pour éviter une dispersion, à l'entourage, du fluide de refroidissement qui pourrait jaillir au travers de la fente 35. A l'intérieur de l'enceinte 36, le fluide de refroidissement doit, de préférence, être maintenu à une température située au-dessous du point de fusion de la colle du carton ondulé.

## Revendications

1. Machine pour fendre en long une bande de matière (8) qui défile, telle que du carton ondulé, comprenant un outil de refendage sous forme d'une fine lame circulaire rotative (1), montée entre deux flasques et dont la périphérie radiale forme une arête coupante qui émerge au dehors de ces flasques la rotation de ladite lame circulaire rotative (1) étant assurée par des moyens d'entraînement, caractérisée en ce que la lame rotative (1) est enfermée dans une enceinte (36) de manière à ce que seule une petite portion de l'arête coupante émerge au dehors de l'enceinte (36) au travers d'une fente (35) prévue sur une paroi (39) de l'enceinte (36), cette paroi (39) étant destinée à être placée à proximité immédiate de la bande à fendre (B), l'enceinte (36) est remplie d'un fluide, de refroidissement et de lubrification de la lame rotative (1), maintenu au-dessous du point de fusion de la colle du carton ondulé et en ce qu'elle comprend une seconde enceinte (80) dans laquelle est montée une brosse rotative (50), placée exactement au-dessus de la lame rotative (1), et s'étendant sur toute la largeur de la bande à fendre (B).

2. Machine selon la revendication 1, caractérisée en ce que l'enceinte (36) est constituée d'une plaque (30) fixée sur un levier (L) et centrée sur l'axe de la lame rotative (1) et d'un couvercle (32), la forme et les dimensions de la plaque (30) et du couvercle (32) étant telles que ces deux éléments forment une enceinte (36) entourant totalement la lame rotative (1) à l'exception de l'extrémité supérieure de la lame (1) qui peut passer au travers d'une fente (35) prévue dans ladite paroi (39) de l'enceinte (36), située à proximité immédiate de la bande (B) qui défile, de manière à guider et/ou supporter la bande (B) à l'endroit du refendage en long.

3. Machine selon la revendication 2, caractérisée en ce que le levier (L) est déplaçable entre une première et une seconde position, en ce que le levier (L) est un levier basculant comprenant une première extrémité libre sur laquelle est fixée l'enceinte (36) et une seconde extrémité montée en pivotement libre sur un chariot (C), des moyens (F) étant prévus pour basculer le levier (L) entre ladite première et seconde position et en ce que le chariot (C) est déplaçable perpendiculairement au sens de défilement de la bande (B).

4. Machine selon la revendication 1, caractérisée en ce que les moyens d'entraînement en rotation de la lame rotative (1) comprennent un arbre rotatif (7) dont une première extrémité pénètre à l'intérieur de l'enceinte (36) et sur laquelle sont montées bloquées en rotation deux mâchoires (3, 2) sous forme de disques circulaires prenant entre elles, en sandwich, la lame rotative (1), l'une des mâchoires (2) pouvant être pressée en direction de l'autre mâchoire (3) par vissage sur un filetage correspondant (72) prévu sur l'arbre (7), la seconde extrémité de l'arbre (7) émergeant hors de l'enceinte (36) et étant munie d'une première poulie d'entraînement (8) reliée par une courroie crantée (11) à une seconde poulie d'entraînement (10) montée sur un arbre transversal de transmission (9) dont l'axe est confondu avec l'axe de basculement du levier (L) sur le chariot (C).

5. Machine selon la revendication 1, caractérisée en ce que la lame (1) est en acier, en céramique ou en acier traité, par exemple au plasma, et possède une épaisseur inférieure à 0,8 mm.

6. Machine selon la revendication 3, caractérisée en ce que chaque chariot (C) comporte des guidages (G₁, G₂) en prise avec un guidage correspondant (T₁, T₂) d'un support transversal et une crémaillère (E) en prise avec une roue dentée (D) reliée à l'arbre de sortie d'un moteur (M) monté sur chaque chariot (C).

7. Machine selon la revendication 4, caractérisée en ce que l'arbre transversal de transmission (9) passe au travers d'un alésage (12) de chaque chariot (C) et à l'intérieur duquel est prévue une douille (13) pouvant, d'une part, librement tourner, à l'aide de paliers (14), relativement au chariot (C) et, d'autre part, coulisser en léger glissement au long de l'arbre transversal de transmission (9) de section carrée, le levier (L) comprenant un alésage muni d'un palier lisse (16) dans lequel est montée en rotation libre une partie cylindrique (15) du chariot (C).

## Claims

1. Apparatus to cut longitudinally a moving strip of material (B), ie corrugated board or similar, comprising a slitting tool with the shape of a thin rotary blade (1) which is arranged between two flanges and whose peripheral cutting edge protrudes from the flanges, characterized by the fact that the rotary blade (1) is fitted in a holder (36) which allows only a small portion of the cutting edge to emerge through a narrow slot (35) added to a wall (39) of the said holder (36), the wall (39) being located very closely to the strip of material (B) to be cut longitudinally, the holder (36) containing a liquid for cooling and lubricating the rotary blade (1), which liquid is kept below the melting-point of the glue on the corrugated board, and by the fact that the said apparatus has a second holder (80) in which a rotary brush (50) is arranged as well as located exactly above the rotary blade (1) in order to extend itself over the whole width of the strip of material (B) to be cut longitudinally.

2. Apparatus according to claim 1, characterized by the fact that the holder (36) comprises a plate (30) fitted on a lever (L) and centered on the axle of the rotary blade (1), and a lid (32), the shape and dimension of the plate (30) and of the lid (32) being such that these two components make up a holder (36) surrounding entirely the rotary blade (1) with the exception of the top part of the blade (1) which may emerge through a slot (35) arranged in the said wall (39) of the holder (36) itself located very closely to the moving strip of material (B) so as to be able to guide and/or support the strip of material (B) in the area where the longitudinal cut takes place.

3. Apparatus according to claim 2, characterized by the fact that the lever (L) is shiftable between a first and a second position, by the fact that the lever (L) is a tilting lever comprising a first free end on which the holder (36) is fitted and a second end fitted for free pivoting on the carriage (C), the means (F) being foreseen for tilting the lever (L) between the said first and second positions, and by the fact that the carriage (C) is shiftable perpendicularly to the moving direction of the strip of material (B).

4. Apparatus according to claim 1, characterized by the fact that the means ensuring the drive of the rotary blade (1) comprise a rotary shaft (7) whose first end penetrates into the holder (36) and on which are fitted two non-rotary jaws (3, 2) having the shape of circular disks for gripping the rotary blade (1), one of the jaws (2) allowing to be pushed against the other jaw (3) when screwed in on a corresponding threading (72) on the shaft (7), the second end of the shaft (7) protruding from the holder (36) and being provided with a first drive pulley (8) connected through a notched belt to a second drive pulley (10) fitted on a crosswise transmission shaft (9) whose axle corresponds with the tilting axle of the lever (L) on the carriage (C).

5. Apparatus according to claim 1, characterized by the fact that the blade (1) consists of steel, of ceramic, or of steel treated for instance with plasma, and has a thickness of less than 0.8 mm.

6. Apparatus according to claim 1, characterized by the fact that every carriage (C) is provided with guides (G1, G2) engaged with the corresponding guides (T1, T2) of a crosswise support, and with a rack (E) itself engaged with a toothed wheel (D) connected to the output shaft of a motor (M) as fitted on each carriage (C).

7. Apparatus according to claim 4, characterized by the fact that its crosswise transmission shaft (9) passes through a bore (12) of each carriage (C) and contains a bushing (13) able to rotate freely on bearing shells (14) with regard to the carriage (C) and to slide with a slight shift along the crosswise transmission shaft (9) with square section, the lever (L) having a bore provided with a smooth bearing shell (16) in which a cylindrical part (15) of the carriage (C) is fitted for free rotation.

## Patentansprüche

1. Maschine zum Schneiden eines laufenden Bandes (B) von Material in Längsrichtung, zum Beispiel von Wellpappe, mit einem Schneidwerkzeug in der Form eines dünnen Kreismessers (1) zwischen zwei Flanschen, dessen radialer Umfang eine Schneidkante bildet, die aus den erwähnten Flanschen hervorragt, wobei die Drehung des besagten Kreismessers (1) durch Antriebsmittel gewährleistet wird, dadurch gekennzeichnet, dass das Kreismesser (1) von einem Rahmen (36) so umschlossen wird, dass nur ein geringer Teil der Schneidkante aus dem Rahmen (36) durch einen Schlitz (35) in einer Wand (39) des Rahmens (36) herausragt, während die Wand (39) dazu bestimmt ist, in unmittelbarer Nähe des zu schneidenden Bandes (B) angebracht zu werden, dass der Rahmen (36) mit einer Kühl- und Schmierflüssigkeit für das Kreismesser (1) gefüllt ist, die unter dem Schmelzpunkt des Wellpappenleims gehalten wird, und dass das Messer einen zweiten Rahmen (80) umfasst, in welchen eine Kreisbürste (50) eingebaut ist, die sich genau über dem Kreismesser (1) befindet und sich über die gesamte Breite des zu schneidenden Bandes (B) erstreckt.

2. Maschine gemäss Patentanspruch 1, dadurch gekennzeichnet, dass der Rahmen (36) aus einer Platte (30), die auf einem Hebel (L) befestigt und auf die Achse des Kreismessers (1) zentriert ist, und aus einem Deckel besteht, wobei die Form und die Abmessungen der Platte (30) und des Deckels (32) so gewählt sind, dass diese beiden Stücke einen Rahmen (36) bilden, der das Kreismesser (1) mit Ausnahme des oberen Endes des Messers (1) umgibt, welches durch einen Schlitz (35) in der besagten Wand (39) des Rahmens (36) gelangen kann, wobei der besagte Schlitz in unmittelbarer Nähe des durchlaufenden Bandes (B) so angeordnet ist, dass das Band (B) an der Längsschneidstelle geführt und/oder abgestützt wird.

3. Maschine gemäss Patentanspruch 2, dadurch gekennzeichnet, dass der Hebel (L) zwischen einer ersten und einer zweiten Stellung verschiebbar ist, dass der Hebel (L) als Kipphebel dient und ein erstes freies Ende, an welchem der Rahmen (36) befestigt ist, sowie ein zweites Ende mit freier Drehmöglichkeit an einem Wagen (C) umfasst, wobei Mittel (F) dazu vorgesehen sind, den Hebel (L) zwischen der besagten ersten und zweiten Stellung zu kippen, und dass der Wagen (C) lotrecht zur Durchlaufrichtung des Bandes (B) verschiebbar ist.

4. Maschine gemäss Patentanspruch 1, dadurch gekennzeichnet, dass die Mittel zum Drehen des Kreismessers (1) eine Drehwelle (7) umfassen, deren erstes Ende in das Innere des Rahmens (36) dringt, an welchem nichtdrehende Backen (3, 2) in der Form von Kreisscheiben befestigt sind, zwischen welchen das Kreismesser (1) angeordnet wird, wobei die eine Backe (2) gegen die andere Backe (3) durch Einschraubebewegung auf einem entsprechenden Gewindeteil (72) an der Welle (7) gedrückt werden kann, während das andere Ende der Welle (7) aus dem Rahmen (36) herausragt und mit einer ersten Antriebsriemenscheibe (8) versehen ist, die über einen gezahnten Riemen (11) mit einer zweiten Antriebsriemenscheibe (10) auf eine querliegende Transmissionswelle (9) montiert ist, deren Achse mit der Kippachse des Hebels (L) auf dem Wagen (C) zusammenfällt.

5. Maschine gemäss Patentanspruch 1, dadurch gekennzeichnet, dass das Kreismesser (1) aus Stahl, Keramik oder zum Beispiel mit Plasma vergütetem Stahl besteht und eine Dicke unter 0,8 mm umfasst.

6. Maschine gemäss Patentanspruch 3, dadurch gekennzeichnet, dass jeder Wagen (C) Führungen (G1, G2) umfasst, die mit einer entsprechenden Führung (T1, T2) eines querliegenden Halters im Eingriff steht, sowie eine Zahnstange (E), die mit einem Zahnrad (D) im Eingriff steht, das mit der Abtriebswelle eines Motors (M) auf dem Wagen (C) verbunden ist.

7. Maschine gemäss Patentanspruch 4, dadurch gekennzeichnet, dass die querliegende Transmissionswelle (9) durch eine Bohrung (12) in jedem Wagen (C) hindurchreicht, in welcher eine Buchse (13) vorgesehen ist, die einerseits mit Hilfe von Kugellagern (14) in bezug auf der Wagen (C) frei drehen kann und andererseits der querliegenden Transmissionswelle (9) mit Vierkantschnitt sich leicht verschieben lässt, wobei der Hebel (L) eine Bohrung aufweist, die mit einer glatten Lagerschale (16) versehen ist, in welcher ein zylindrischer Teil (15) des Wagens (C) freidrehend montiert ist.
